# EUROPÄISCHE PATENTSCHRIFT

(11) **EP 3 649 381 B1**
(45) Veröffentlichungstag und Bekanntmachung des Hinweises auf die Patenterteilung: **10.08.2022**
(21) Anmeldenummer: 18737830.2
(22) Anmeldetag: 26.06.2018
(51) Int. Cl.: F16H 61/24, F16H 61/36

(54) **SCHALTBETÄTIGUNG FÜR EIN HANDSCHALTGETRIEBE EINES KRAFTFAHRZEUGS MIT EINER ÜBER EINE KOPPELSTANGE GEKOPPELTEN MASSE**
SHIFT ACTUATOR FOR A MANUAL GEARBOX OF A MOTOR VEHICLE HAVING A MASS COUPLED VIA A COUPLING ROD
ACTIONNEMENT DE CHANGEMENT DE RAPPORT POUR UNE BOÎTE DE VITESSES MANUELLE D'UN VÉHICULE AUTOMOBILE COMPRENANT UNE MASSE ACCOUPLÉE PAR LE BIAIS D'UNE BARRE D'ACCOUPLEMENT

(30) Priorität: 07.07.2017 DE 102017211615
(43) Veröffentlichungstag der Anmeldung: 13.05.2020
(73) Patentinhaber: Volkswagen Aktiengesellschaft, 38440 Wolfsburg (DE)
(72) Erfinder: HIRTE, Andreas, 38543 Hillerse (DE); LUTHER, Norbert, 31073 Grünenplan (DE); HELLER, Mathias, 38855 Wernigerode (DE); MÜLLER, Gerhard, 39359 Calvörde (DE)
(86) Internationale Anmeldenummer: PCT/EP2018/067132
(87) Internationale Veröffentlichungsnummer: WO 2019/007757

(56) Entgegenhaltungen:
- WO-A1-2014/199049
- DE-A1-102006 024 627
- FR-A1- 2 976 994
- JP-A- 2009 228 868

## Beschreibung

Die Erfindung betrifft eine Schaltbetätigung für ein Handschaltgetriebe eines Kraftfahrzeugs mit den Merkmalen des Patentanspruchs 1.

Aus der DE 10 2012 220 344 A1 ist eine Schaltbetätigung für ein Handschaltgetriebe eines Kraftfahrzeugs bekannt, welche durch einen Handschalthebel des Kraftfahrzeugs betätigbar ist und einen Schaltbetätigungshebel zur Betätigung einer Schaltwelle des Getriebes aufweist. Dabei ist der Schaltbetätigungshebel und damit die Schaltwelle durch einen Schaltseilzug um eine Schalt-Drehachse drehbar. An dem Schaltbetätigungshebel ist dabei eine Masse befestigt.

Eine ähnliche Schaltbetätigung ist aus der FR 2 976 994 bekannt.

DE 10 2012 000 306 A1 ist eine Schaltbetätigung für ein Handschaltgetriebe eines Kraftfahrzeugs bekannt, welche mindestens zwei Massen aufweist, die derart mit einem Übertragungsglied gekoppelt sind, dass durch Schwingungen des Übertragungsgliedes die Massen in zueinander gegenläufige Schwingungen versetzt werden.

Aus der DE 102 10 972 A1 ist eine Schaltbetätigung für ein Kraftfahrzeugs mit einer Schaltwelle bekannt, welche eine mit der Schaltwelle bewegte Zusatzmasse aufweist.

Die im Stand der Technik bekannten Schaltbetätigungen sind jedoch noch nicht optimal ausgebildet. So können vom Motor des Kraftfahrzeugs auf die Masse übertragene Schwingungen zu verstärkten Vibrationen im Handschalthebel und/oder akustischen Beeinträchtigungen führen. Dies kann den Komfort des Fahrzeugfahrers beeinträchtigen. Zudem erfordern aus dem Stand der Technik bekannte Schaltbetätigungen häufig einen großen Bauraum. Dies kann dazu führen, dass der Bauraum von anderen Fahrzeugkomponenten auf den Bauraum für die Schaltbetätigung angepasst werden muss und/oder die Massenträgheit durch Bauraumrestriktion stark begrenzt wird. Darüber hinaus gehen aus dem Stand der Technik bekannte Schaltbetätigungen häufig mit hohen Bereitstellungskosten und/oder einem hohen Gewicht einher.

Der Erfindung liegt daher die Aufgabe zu Grunde, die eingangs genannte Schaltbetätigung, derart auszugestalten und weiterzubilden, dass der Komfort des Fahrzeugfahrers, insbesondere auf kostengünstige, gewichtssparende und/oder bauraumsparende Weise, verbessert werden kann.

Die der Erfindung zugrunde liegende Aufgabe wird durch die Schaltbetätigung für ein Handschaltgetriebe eines Kraftfahrzeugs mit den Merkmalen des Patentanspruchs 1 gelöst.

Die Schaltbetätigung ist dabei durch einen Handschalthebel des Kraftfahrzeugs betätigbar. Dabei weist die Schaltbetätigung insbesondere einen Schaltbetätigungshebel zur Betätigung einer Schaltwelle des Getriebes auf. Der Schaltbetätigungshebel - und beispielsweise damit auch die Schaltwelle - ist dabei insbesondere durch einen Schaltseilzug um eine Schalt-Drehachse drehbar.

Der Schaltbetätigungshebel ist dabei insbesondere über eine Koppelstange mit einer an einem Stützlager (Widerlager) drehbar gelagerten Masse verbunden, insbesondere ist das Stützlager auch schwingungsentkoppelt gelagert.

Auf diese Weise kann die Masse und eine dadurch erzielbare Schaltträgheit und/oder Glättung von Schaltkraftspitzen von einer Wählbewegung entkoppelt und auf diese Weise auch Vibrationen des Handschalthebel vermieden werden. So kann der Komfort des Fahrzeugfahrers, beispielsweise dessen Schaltkomfort, verbessert werden.

Durch die Koppelstange kann dabei eine starre Übersetzung der Massenträgheit realisiert werden, was es ermöglicht mit einem reduzierten Kosten- und/oder Gewichtsaufwand und/oder Bauraum eine hohe Massenträgheit zu erzielen. Dabei ermöglicht die Koppelstange zudem die Masse in einem Abstand zur Schaltwelle, insbesondere zur Drehachse der Schaltwelle, und/oder mit einer unterschiedlichen Drehachse zu lagern. Dies ermöglicht es wiederum, die Schaltbetätigung an die aufgrund der anderen Fahrzeugkomponenten gegebenen Bauraum- und/oder Schnittstellenanforderungen, wie die aktuelle Serienkonstruktion, beispielsweise auch unter Erhöhung der Massenträgheit, anzupassen und insbesondere diesbezüglich austauschbar zu gestalten.

Der Schaltseilzug kann insbesondere zur Übertragung einer Schaltbewegung, insbesondere in Zug- und Druckrichtung, dienen. Durch den Schaltseilzug beziehungsweise die Schalt-Drehachse kann insbesondere eine Schaltbewegung nach vorne oder hinten am Handschalthebel, beispielsweise zum Gangeinlegen, zum Beispiel zum Schalten vom dritten und dem vierten Gang, über die Schaltbetätigung an das Getriebe übertragen werden.

Die Koppelstange kann beispielsweise - gegebenenfalls ausschließlich - zur Schub- und Zugkraftübertragung der Massenträgheitskräfte dienen.

In einer Ausgestaltung ist die Koppelstange direkt, insbesondere (lediglich) über einen Befestigungsbolzen beziehungsweise -Zapfen, mit der Masse verbunden. So kann die Schaltbetätigung auf kostengünstige, gewichtssparende und/oder bauraumsparende Weise ausgestaltet werden.

In einer weiteren Ausgestaltung ist die Masse durch einen Lagerbolzen beziehungsweise - Zapfen an dem Stützlager drehbar gelagert. So kann die Schaltbetätigung ebenfalls auf kostengünstige, gewichtssparende und/oder bauraumsparende Weise ausgestaltet werden.

In einer weiteren Ausgestaltung sind der Schaltseilzug und die Koppelstange über eine gemeinsame Befestigungsachse an dem Schaltbetätigungshebel befestigt. Dabei können der Schaltseilzug und die Koppelstange insbesondere durch einen gemeinsamen Befestigungsbolzen beziehungsweise -Zapfen an dem Schaltbetätigungshebel befestigt sein. So können der Materialkosten, Gewicht und/oder Bauraum weiter reduziert werden.

In einer weiteren Ausgestaltung ist die Masse in Form eines Massehebels ausgebildet. Dabei kann der Massehebel insbesondere einen Koppelstangenbefestigungsabschnitt, einen Massenträgheitsabschnitt und einen zwischen dem Koppelstangenbefestigungsabschnitt und dem Massenträgheitsabschnitt ausgebildeten Lagerabschnitt aufweisen.

In einer weiteren Ausgestaltung ist der Massehebel, insbesondere im Wesentlichen F-förmig ausgestaltet. So kann die Masse auf besonders einfache und insbesondere gewichts- und/oder bauraumsparende Weise ausgestaltet werden.

In einer weiteren Ausgestaltung ist der Massenträgheitsabschnitt des Massehebels um das Stützlager schwenkbar. So kann zum Einen der zur Verfügung stehende Bauraum optimal genutzt werden. Zum Anderen kann so die gelagerte Masse wie im Folgenden erläutert gegen Lösen gesichert werden.

In einer weiteren Ausgestaltung weist das Stützlager eine Sicherung, beispielsweise in Form einer Sicherungsnase, zur Sicherung der gelagerten Masse auf. Dabei kann die Masse, insbesondere der Lagerabschnitt des Massehebels, in einer Montagestellung an der Sicherung, beispielsweise Sicherungsnase, vorbeiführbar sein. Von der Montagestellung kann die Masse in eine Funktionsstellung schwenkbar sein. Dabei kann die Funktionsstellung beispielsweise die unterschiedlichen Schaltstellungen und insbesondere auch die Neutralstellung der Masse, insbesondere des Massehebels, umfassen. In der Funktionsstellung kann insbesondere die Sicherung, beispielsweise die Sicherungsnase, die gelagerte Masse gegen Lösen sichern. Zum Beispiel kann in der Funktionsstellung die Sicherung die gelagerte Masse dadurch gegen Lösen sichern, dass die Sicherung, beispielsweise die Sicherungsnase, einen Sperrabschnitt an der Masse, beispielsweise an dem Lagerabschnitt des Massehebels, zum Beispiel vertikal, sperrt. So kann auf kosten-, gewicht- und bauraumsparende Weise - und beispielsweise ohne zusätzliche Komponenten - eine Sicherung in das Stützlager und damit die Schaltbetätigung integriert werden.

In einer weiteren Ausgestaltung ist das Stützlager mittels elastischer Elemente, zum Beispiel Gummientkopplungselemente, schwingungsentkoppelt. Beispielsweise kann das Stützlager mittels elastischer Elemente schwingungsentkoppelt am Getriebe, insbesondere an einem Getriebegehäuse, befestigt sein. So kann die Masse auf kosten-, gewicht- und bauraumsparende Weise schwingungsentkoppelt sein und auf diese Weise Vibrationen weiter reduziert werden.

Erfindungsgemäß ist der Schaltbetätigungshebel - und damit die Schaltwelle - durch einen Auswahlseilzug translatorisch in axialer Richtung der Schaltwelle bewegbar und das Stützlager ist als das Stützlager des Schaltseilzugs und des Auswahlseilzug ausgebildet und/oder vorgesehen. So können mehrere Funktionen durch eine Komponente erfüllt und Kosten, Gewicht und/oder Bauraum eingespart werden. Zudem können so durch eine Schwingungsentkopplung des Stützlagers, beispielsweise durch elastische Elemente, direkt mehrere Komponenten schwingungsentkoppelt werden.

Dabei kann der Auswahlseilzug insbesondere über ein, um eine Auswahl-Drehachse drehbar gelagertes Übertragungselement mit dem Schaltbetätigungshebel verbunden sein.

Der Auswahlseilzug kann insbesondere zur Übertragung einer Wählbewegung, insbesondere in Zug- und Druckrichtung, dienen. Durch den Auswahlseilzug beziehungsweise die translatorische Bewegung des Schaltbetätigungshebel in axialer Richtung der Schaltwelle und/oder die Auswahl-Drehachse kann insbesondere eine Schaltbewegung nach links oder rechts am Handschalthebel, beispielsweise zur Schaltgassenwahl, zum Beispiel zum Schalten vom vierten in den fünften Gang, über die Schaltbetätigung an das Getriebe übertragen werden.

In einer weiteren Ausgestaltung ist zwischen dem Schaltbetätigungshebel und dem Übertragungselement eine Gleitschuhführung vorgesehen. Dabei kann durch die Gleitschuhführung insbesondere eine rotatorische Bewegung des Übertragungselementes um die Auswahl-Drehachse in eine translatorische Bewegung des Schaltbetätigungshebels - und damit insbesondere auch der Schaltwelle - in axialer Richtung der Schaltwelle bewirkt werden.

Die Masse kann insbesondere um eine andere Drehachse als die Schalt- und/oder Auswahl-Drehachse drehbar gelagert sein.

Der Schaltbetätigungshebel und/oder die Masse können zum Beispiel als Blech-Stanz- und/oder -Biege-Teile ausgestaltet werden und/oder über Bolzen, zum Beispiel Nietbolzen, angebunden werden. So können der Schaltbetätigungshebel und/oder die Masse auf kosten-, gewicht- und bauraumsparende Weise ausgeführt werden. Aufwändiges Metallziehen und/oder -gießen kann so vermieden werden.

Die eingangs genannten Nachteile sind daher vermieden und entsprechende Vorteile sind erzielt.

Es gibt nun eine Vielzahl von Möglichkeiten, die erfindungsgemäße Schaltbetätigung in vorteilhafter Art und Weise auszugestalten und weiterzubilden. Hierfür darf zunächst auf die dem Patentanspruch 1 nachgeordneten Patentansprüche verwiesen werden. Im Folgenden wird eine bevorzugte Ausgestaltung der erfindungsgemäßen Schaltbetätigung anhand der Zeichnung und der dazugehörigen Beschreibung näher erläutert. In der Zeichnung zeigt:
- Fig. 1: in einer perspektivischen Darstellung eine Ausführungsform einer erfindungsgemäßen Schaltbetätigung,
- Fig. 2: in einer anderen perspektivischen Darstellung die in Fig. 1 dargestellte Ausführungsform der erfindungsgemäßen Schaltbetätigung, und
- Fig. 3: in einer weiteren perspektivischen Darstellung die in Fig. 1 und 2 dargestellte Ausführungsform einer erfindungsgemäßen Schaltbetätigung in einer Montagestellung und in zwei Funktionsstellungen.

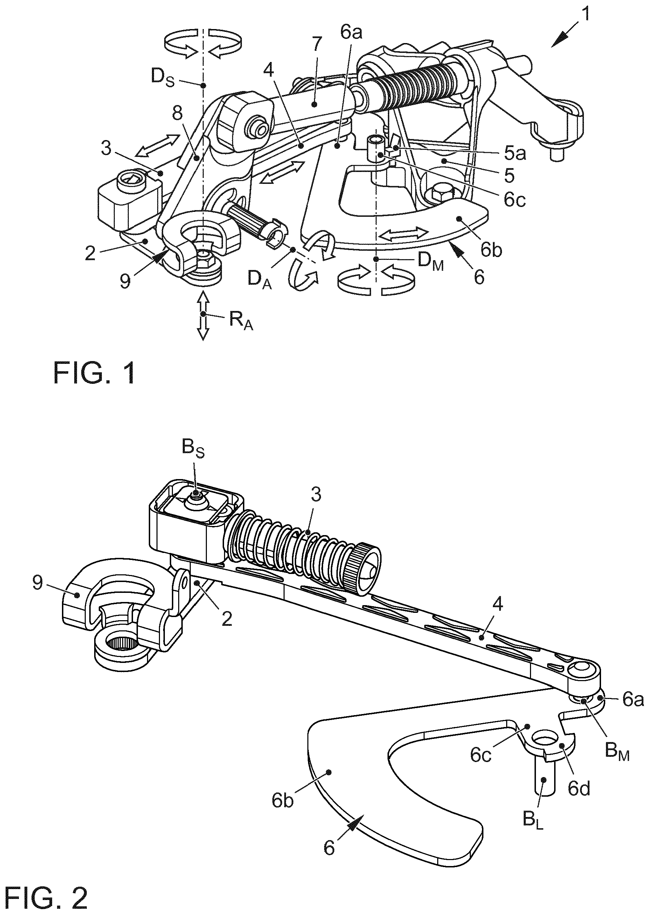

Fig. 1 bis 3 zeigen eine Ausführungsform einer erfindungsgemäßen Schaltbetätigung 1 für ein Handschaltgetriebe eines Kraftfahrzeugs, wobei die Schaltbetätigung 1 durch einen Handschalthebel des Kraftfahrzeugs betätigbar ist. Dabei weist die Schaltbetätigung 1 einen Schaltbetätigungshebel 2 zur Betätigung einer Schaltwelle (nicht explizit dargestellt) des Getriebes auf. Der Schaltbetätigungshebel 2 - und damit insbesondere auch die Schaltwelle des Getriebes - sind durch einen Schaltseilzug 3 um eine Schalt-Drehachse Ds drehbar. Der Schaltbetätigungshebel 2 ist dabei über eine Koppelstange 4 mit einer an einem Stützlager (Widerlager) 5 drehbar gelagerten Masse 6 verbunden.

Fig. 1 bis 3 zeigen, dass dabei die Koppelstange 4 direkt, also lediglich durch einen Befestigungsbolzen beziehungsweise -Zapfen B_{M}, mit der Masse 6 verbunden ist. Die Masse 6 ist dabei durch einen Lagerbolzen beziehungsweise -Zapfen B_{L} an dem Stützlager 5 drehbar gelagert. Der Schaltseilzug 3 und die Koppelstange 4 sind dabei insbesondere über eine gemeinsame Befestigungsachse und insbesondere auch durch einen gemeinsamen Befestigungsbolzen beziehungsweise -Zapfen Bs an dem Schaltbetätigungshebel 2 befestigt.

Fig. 1 bis 3 zeigen weiterhin, dass die Masse 6 in Form eines Massehebels ausgebildet ist, welcher einen Koppelstangenbefestigungsabschnitt 6a, einen Massenträgheitsabschnitt 6b und einen zwischen dem Koppelstangenbefestigungsabschnitt 6a und dem Massenträgheitsabschnitt 6b ausgebildeten Lagerabschnitt 6c aufweist. Der Massehebel ist dabei im Wesentlichen F-förmig ausgestaltet. Der Massenträgheitsabschnitt 6b des Massehebels ist dabei um das Stützlager 5 schwenkbar.

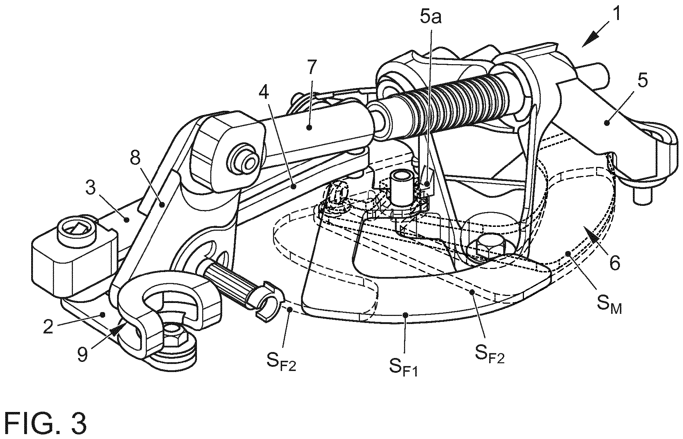

Fig. 1 und 3 zeigen, dass das Stützlager 5 eine Sicherung 5a, insbesondere in Form einer Sicherungsnase, zur Sicherung der gelagerten Masse 6 aufweist.

Aus Fig. 3 ist ersichtlich, dass die Masse 6, insbesondere der Lagerabschnitt 6c des Massehebels, in einer Montagestellung S_{M} an der Sicherung 5a, insbesondere Sicherungsnase, vorbeiführbar ist. Wird die Masse 6 nun von der Montagestellung S_{M} in eine Funktionsstellung S_{F1}, S_{F2} geschwenkt, welche beispielsweise die Neutralstellung S_{F1} und die unterschiedlichen Schaltstellungen S_{F2} der Masse 6 umfassen kann, sichert die Sicherung 5a, insbesondere die Sicherungsnase, die gelagerte Masse 6 gegen Lösen. Dies kann insbesondere dadurch erfolgen, dass die Sicherungsnase 5a einen Sperrabschnitt an der Masse 6, beispielsweise an dem Lagerabschnitt 6c des Massehebels, sperrt.

Fig. 1 bis 3 zeigen weiterhin, dass der Schaltbetätigungshebel 2 - und damit insbesondere auch die Schaltwelle - durch einen Auswahlseilzug 7 translatorisch in axialer Richtung R_{A} der Schaltwelle bewegbar ist. Dabei ist der Auswahlseilzug 7 über ein, um eine Auswahl-Drehachse D_{A} drehbar gelagertes Übertragungselement 8 mit dem Schaltbetätigungshebel 2 verbunden. Zwischen dem Schaltbetätigungshebel 2 und dem Übertragungselement 8 ist dabei eine Gleitschuhführung 9 vorgesehen. Die Masse 6 ist dabei um eine andere Drehachse D_{M} als die Schalt-Drehachse Ds und Auswahl-Drehachse D_{A} drehbar gelagert.

Fig. 1 bis 3 zeigen zudem, dass das Stützlager 5 an dem die Masse 6 gelagert ist, sowohl als Stützlager für den Schaltseilzug 3 als auch als Stützlager für den Auswahlseilzug 7 dient. Die dargestellten Befestigungsschrauben des Stützlagers 5 können beispielsweise mit elastischen Elementen (nicht dargestellt) ausgestattet sein und mittels diesen schwingungsentkoppelt, beispielsweise am Getriebe, zum Beispiel am Getriebegehäuse, befestigt sein.

### Bezugszeichenliste

- 1: Schaltbetätigung
- 2: Schaltbetätigungshebel
- 3: Schaltseilzug
- 4: Koppelstange
- 5: Stützlager (Widerlager)
- 5a: Sicherung
- 6: Masse
- 6a: Koppelstangenbefestigungsabschnitt der Masse
- 6b: Massenträgheitsabschnitt der Masse
- 6c: Lagerabschnitt der Masse
- 7: Auswahlseilzug
- 8: Übertragungselement
- 9: Gleitschuhführung

- Bs: Befestigungsbolzen beziehungsweise -Zapfen von Schaltbetätigungshebel, Schaltseilzug und Koppelstange
- B_{M}: Befestigungsbolzen beziehungsweise -Zapfen von Koppelstange und Masse
- B_{L}: Lagerbolzen beziehungsweise -Zapfen von Masse an Stützlager

- D_{S}: Schalt-Drehachse
- D_{A}: Auswahl-Drehachse
- D_{M}: Drehachse der Masse
- R_{A}: axiale Richtung der Schaltwelle
- S_{M}: Montagestellung der Masse
- S_{F1}: erste Funktionsstellung, beispielsweise Neutralstellung der Masse
- S_{F2}: zweite Funktionsstellung, beispielsweise Schaltstellungen der Masse

## Patentansprüche

1. Schaltbetätigung (1) für ein Handschaltgetriebe eines Kraftfahrzeugs, wobei die Schaltbetätigung (1) durch einen Handschalthebel des Kraftfahrzeugs betätigbar ist, wobei die Schaltbetätigung (1) einen Schaltbetätigungshebel (2) zur Betätigung einer Schaltwelle des Getriebes aufweist, wobei der Schaltbetätigungshebel (2) und damit die Schaltwelle durch einen Schaltseilzug (3) um eine Schalt-Drehachse (Ds) drehbar ist, wobei der Schaltbetätigungshebel (2) über eine Koppelstange (4) mit einer an einem Stützlager (5) drehbar gelagerten Masse (6) verbunden ist, **dadurch gekennzeichnet, dass** der Schaltbetätigungshebel (2) und damit die Schaltwelle durch einen Auswahlseilzug (7) translatorisch in axialer Richtung (R_{A}) der Schaltwelle bewegbar ist, und dass das Stützlager (5) das Stützlager des Schaltseilzugs (3) und des Auswahlseilzugs (7) ist.

2. Schaltbetätigung (1) nach Anspruch 1, **dadurch gekennzeichnet, dass** der Auswahlseilzug (7) über ein, um eine Auswahl-Drehachse (D_{A}) drehbar gelagertes Übertragungselement (8) mit dem Schaltbetätigungshebel (2) verbunden ist.

3. Schaltbetätigung (1) nach Anspruch 2, **dadurch gekennzeichnet, dass** zwischen dem Schaltbetätigungshebel (2) und dem Übertragungselement (8) eine Gleitschuhführung (9) vorgesehen ist.

4. Schaltbetätigung (1) nach einem der Ansprüche 1 bis 3, **dadurch gekennzeichnet, dass** das Stützlager (5) eine Sicherung (5a) zur Sicherung der gelagerten Masse (6) aufweist, dass die Masse (6) in einer Montagestellung an der Sicherung (5a) vorbeiführbar ist, und wobei die Masse (6) von der Montagestellung (S_{M}) in eine Funktionsstellung (S_{F1}, S_{F2}) schwenkbar ist, in welcher (S_{F1}, S_{F2}) die Sicherung (5a) die gelagerte Masse (6) gegen Lösen sichert.

5. Schaltbetätigung (1) nach Anspruch 4, **dadurch gekennzeichnet, dass** die Koppelstange (4) direkt, insbesondere über einen Befestigungsbolzen beziehungsweise -Zapfen (B_{M}) mit der Masse (6) verbunden.

6. Schaltbetätigung (1) nach Anspruch 4 oder 5, **dadurch gekennzeichnet, dass** die Masse (6) durch einen Lagerbolzen beziehungsweise -Zapfen (B_{L}) an dem Stützlager (5) drehbar gelagert ist.

7. Schaltbetätigung (1) nach einem der vorstehenden Ansprüche, **dadurch gekennzeichnet, dass** der Schaltseilzug (3) und die Koppelstange (4) über eine gemeinsame Befestigungsachse an dem Schaltbetätigungshebel (2) befestigt sind.

8. Schaltbetätigung (1) nach Anspruch 7, **dadurch gekennzeichnet, dass** der Schaltseilzug (3) und die Koppelstange (4) durch einen gemeinsamen Befestigungsbolzen beziehungsweise -Zapfen (Bs) an dem Schaltbetätigungshebel (2) befestigt sind.

9. Schaltbetätigung (1) nach einem der vorstehenden Ansprüche, **dadurch gekennzeichnet, dass** die Masse (6) in Form eines Massehebels ausgebildet ist, welcher einen Koppelstangenbefestigungsabschnitt (6a), einen Massenträgheitsabschnitt (6b) und einen zwischen dem Koppelstangenbefestigungsabschnitt (6a) und dem Massenträgheitsabschnitt (6b) ausgebildeten Lagerabschnitt (6c) aufweist.

10. Schaltbetätigung (1) nach Anspruch 9, **dadurch gekennzeichnet, dass** der Massehebel im Wesentlichen F-förmig ausgestaltet ist.

11. Schaltbetätigung (1) nach Anspruch 9 oder 10, **dadurch gekennzeichnet, dass** der Massenträgheitsabschnitt (6b) des Massehebels um das Stützlager (5) schwenkbar ist.

12. Schaltbetätigung (1) nach einem der vorstehenden Ansprüche, **dadurch gekennzeichnet, dass** das Stützlager (5) mittels elastischer Elemente schwingungsentkoppelt, insbesondere an einem Getriebegehäuse, befestigt ist.

## Claims

1. Shift actuation means (1) for a manual gearbox of a motor vehicle, it being possible for the shift actuation means (1) to be actuated by way of a manual gearshift lever of the motor vehicle, the shift actuation means (1) having a shift actuation lever (2) for actuating a shift shaft of the gearbox, it being possible for the shift actuation lever (2) and therefore the shift shaft to be rotated about a shift rotational axis (D_{S}) by way of a shift control cable (3), the shift actuation lever (2) being connected via a coupling rod (4) to a mass (6) which is mounted rotatably on a supporting bearing (5), **characterized in that** the shift actuation lever (2) and therefore the shift shaft can be moved translationally in the axial direction (R_{A}) of the shift shaft by way of a selection control cable (7), and **in that** the supporting bearing (5) is the supporting bearing of the shift control cable (3) and the selection control cable (7).

2. Shift actuation means (1) according to Claim 1, **characterized in that** the selection control cable (7) is connected to the shift actuation lever (2) via a transmission element (8) which is mounted such that it can be rotated about a selection rotational axis (D_{A}).

3. Shift actuation means (1) according to Claim 2, **characterized in that** a sliding pad guide (9) is provided between the shift actuation lever (2) and the transmission element (8).

4. Shift actuation means (1) according to one of Claims 1 to 3, **characterized in that** the supporting bearing (5) has a securing means (5a) for securing the mounted mass (6), it being possible for the mass (6) to be guided past the securing means (5a) in a mounting position, and it being possible for the mass (6) to be pivoted from the mounting position (S_{M}) into a functional position (S_{F1}, S_{F2}), in which (S_{F1}, S_{F2}) the securing means (5a) secures the mounted mass (6) against release.

5. Shift actuation means (1) according to Claim 4, **characterized in that** the coupling rod (4) is connected to the mass (6) directly, in particular via a fastening bolt or pin (B_{M}).

6. Shift actuation means (1) according to Claim 4 or 5, **characterized in that** the mass (6) is mounted rotatably on the supporting bearing (5) by way of a bearing bolt or pin (B_{L}).

7. Shift actuation means (1) according to one of the preceding claims, **characterized in that** the shift control cable (3) and the coupling rod (4) are fastened to the shift actuation lever (2) via a common fastening axle.

8. Shift actuation means (1) according to Claim 7, **characterized in that** the shift control cable (3) and the coupling rod (4) are fastened to the shift actuation lever (2) by way of a common fastening bolt or pin (B_{S}).

9. Shift actuation means (1) according to one of the preceding claims, **characterized in that** the mass (6) is configured in the form of a mass lever which has a coupling rod fastening section (6a), a mass inertia section (6b) and a bearing section (6c) which is configured between the coupling rod fastening section (6a) and the mass inertia section (6b).

10. Shift actuation means (1) according to Claim 9, **characterized in that** the mass lever is of substantially F-shaped configuration.

11. Shift actuation means (1) according to Claim 9 or 10, **characterized in that** the mass inertia section (6b) of the mass lever can be pivoted around the supporting bearing (5).

12. Shift actuation means (1) according to one of the preceding claims, **characterized in that** the supporting bearing (5) is fastened, in particular to a gearbox housing, in a manner which is decoupled in terms of vibration by means of elastic elements.

## Revendications

1. Actionnement de changement de vitesse (1) pour une boîte de changement de vitesse manuelle d'un véhicule automobile, l'actionnement de changement de vitesse (1) pouvant être actionné par un levier de changement de vitesse manuel du véhicule automobile, l'actionnement de changement de vitesse (1) présentant un levier d'actionnement de changement de vitesse (2) pour l'actionnement d'un arbre de changement de vitesse de la boîte de vitesses, le levier d'actionnement de changement de vitesse (2) et donc l'arbre de changement de vitesse pouvant être tourné autour d'un axe de rotation de changement de vitesse (D_{S}) par un câble de changement de vitesse (3), le levier d'actionnement de changement de vitesse (2) étant relié par l'intermédiaire d'une barre de couplage (4) à une masse (6) montée à rotation sur un palier de support (5), **caractérisé en ce que** le levier d'actionnement de changement de vitesse (2) et donc l'arbre de changement de vitesse peut être déplacé en translation dans la direction axiale (R_{A}) de l'arbre de changement de vitesse par un câble de sélection (7), et **en ce que** le palier de support (5) est le palier de support du câble de changement de vitesse (3) et du câble de sélection (7).

2. Actionnement de changement de vitesse (1) selon la revendication 1, **caractérisé en ce que** le câble de sélection (7) est relié au levier d'actionnement de changement de vitesse (2) par l'intermédiaire d'un élément de transmission (8) monté à rotation autour d'un axe de rotation de sélection (D_{A}).

3. Actionnement de changement de vitesse (1) selon la revendication 2, **caractérisé en ce qu'**un guidage à patin glissant (9) est prévu entre le levier d'actionnement de changement de vitesse (2) et l'élément de transmission (8) .

4. Actionnement de changement de vitesse (1) selon l'une quelconque des revendications 1 à 3, **caractérisé en ce que** le palier de support (5) présente une protection (5a) pour la protection de la masse (6) montée, **en ce que** la masse (6) peut être passée devant la protection (5a) dans une position de montage, et dans lequel la masse (6) peut pivoter de la position de montage (S_{M}) à une position de fonctionnement (S_{F1}, S_{F2}) dans laquelle (S_{F1}, S_{F2}) la protection (5a) protège la masse (6) montée contre un détachement.

5. Actionnement de changement de vitesse (1) selon la revendication 4, **caractérisé en ce que** la barre de couplage (4) est reliée directement à la masse (6), notamment par l'intermédiaire d'un boulon ou d'un tenon de fixation (B_{M}).

6. Actionnement de changement de vitesse (1) selon la revendication 4 ou 5, **caractérisé en ce que** la masse (6) est montée à rotation sur le palier de support (5) par un axe de palier ou un pivot (B_{L}).

7. Actionnement de changement de vitesse (1) selon l'une quelconque des revendications précédentes, **caractérisé en ce que** le câble de changement de vitesse (3) et la barre de couplage (4) sont fixés au levier d'actionnement de changement de vitesse (2) par l'intermédiaire d'un axe de fixation commun.

8. Actionnement de changement de vitesse (1) selon la revendication 7, **caractérisé en ce que** le câble de changement de vitesse (3) et la barre de couplage (4) sont fixés au levier d'actionnement de changement de vitesse (2) par un boulon ou un tenon de fixation commun (B_{S}) .

9. Actionnement de changement de vitesse (1) selon l'une quelconque des revendications précédentes, **caractérisé en ce que** la masse (6) est configurée sous la forme d'un levier de masse, qui présente une section de fixation de barre de couplage (6a), une section d'inertie de masse (6b) et une section de palier (6c) formée entre la section de fixation de barre de couplage (6a) et la section d'inertie de masse (6b).

10. Actionnement de changement de vitesse (1) selon la revendication 9, **caractérisé en ce que** le levier de masse est conçu essentiellement en forme de F.

11. Actionnement de changement de vitesse (1) selon la revendication 9 ou 10, **caractérisé en ce que** la section d'inertie de masse (6b) du levier de masse peut pivoter autour du palier de support (5).

12. Actionnement de changement de vitesse (1) selon l'une quelconque des revendications précédentes, **caractérisé en ce que** le palier de support (5) est fixé au moyen d'éléments élastiques de manière à être découplé des vibrations, notamment sur un carter de boîte de vitesses.
